# EUROPÄISCHE PATENTANMELDUNG

(11) **EP 3 893 068 A1**
(43) Veröffentlichungstag der Anmeldung: **13.10.2021**
(21) Anmeldenummer: 20169019.5
(22) Anmeldetag: 09.04.2020
(51) Int. Cl.: G05B 19/418

(54) **VERFAHREN ZUR DYNAMISCHEN PRODUKTIONSPLANUNG BEI STRANGGUSS ANLAGEN**

(71) Anmelder: Primetals Technologies Austria GmbH, 4031 Linz (AT); Primetals Technologies Germany GmbH, 91058 Erlangen (DE)
(72) Erfinder: Aigner, Christoph, 4720 Neumarkt (AT); Ankermann, Kai, 91077 Neunkirchen a.B. (DE); Fuchshuber, Daniel, 4055 Pucking (AT)
(74) Vertreter: Metals@Linz

(57) **Zusammenfassung**

Die vorliegende Erfindung betrifft das Gebiet von Stranggussanlagen in der Metallerzeugenden Industrie.

Die Aufgabe der Erfindung ist es ein Verfahren zur Verfügung zu stellen, welches eine möglichst kosteneffiziente Produktion mit minimalem Ausschuss und verringerten Lagerkosten gewährleistet.

Die Aufgabe wird gelöst durch einen Vergleich von Soll-Produktionsparametern mit Ist-Produktionsparametern, sollten die Ist-Produktionsparameter von den Soll-Produktionsparametern abweichen, wird ein Strangabbild anhand von Ist-Produktionsparametern erstellt. Das Strangabbild umfasst den bereits gegossenen und noch nicht geschnittenen Strang (7), sowie zumindest jenen Strang (7), der sich anhand eines Restgewichtes im Gießverteiler und vorgegebener Parameter ergibt. Mit Hilfe des berechneten Strangabbildes wird innerhalb des vorgegebenen Produktionsplans geprüft und falls möglich ein neuer Produktionsplan erstellt. Sollte aus dem vorgegebenen Produktionsplan keine Lösung auffindbar sein, wird das Strangabbild an ein Produktionsplanungssystem (4) übermittelt. Das Produktionsplanungssystem (4) erstellt aus allen vorliegenden Aufträgen einen neuen Produktionsplan, anhand eines vorgegebenen Optimierungskriteriums. Der neue Produktionsplan wird danach an das Produktionssystem (3) übermittelt.

## Beschreibung

### Gebiet der Technik

Die vorliegende Erfindung betrifft das Gebiet von Stranggussanlagen in der Metallerzeugenden Industrie. Einerseits betrifft die Erfindung ein Verfahren zur dynamischen Produktionsplanung einer Stranggussanlage zum Gießen eines Stranges mit einem Produktionssystem und einem vorgegebenen Produktionsplan.

Andererseits betrifft die Erfindung eine Stranggussanlage. Des Weiteren umfasst die Erfindung ein Computerprogramm, welches das Verfahren zur dynamischen Produktionsplanung einer Stranggussanlage ausführt.

### Stand der Technik

Stranggießen ist ein kontinuierliches Verfahren zur Herstellung von Halbzeugen. Dabei wird beispielsweise ein im Stahlwerk erzeugte Flüssigstahl in einer gekühlten Kokille vergossen und in einer Strangführung bis zur vollständigen Durcherstarrung abgekühlt.
Der durcherstarrte Strang wir an Brennschneidemaschinen entsprechend des Produktionsauftrages abgelängt und zur Weiterverarbeitung abtransportiert.
Eine Erstellung von Produktionsplänen für eine gesamte Produktionslinie erfolgt in MES (Manufacturing Execution System) bzw. PPS (Produktions- Planungs- System) Systemen - auch Level 3 (L3) Systeme genannt, welche anhand von Regeln vorhandene Kundenbestellung, welche in einem Order Management System - Level 4 (L4) System - abgelegt sind, zusammenfasst. Im Anschluss werden die erstellten Produktionspläne als Produktionsauftrag an die Einzelaggregate übertragen.
Aus den erhaltenen Auftragsdaten errechnet die Prozessoptimierung - Level 2 (L2) System - eine Erzeugungsvorschrift sowie den Produktplan. Auf Grund des errechneten Produktplanes erfolgen Einstellwerte für ein Kokillenformat sowie Längenvorgabe an eine Brennschneidemaschine.
Solange der Prozess entsprechend der Erzeugungsvorschrift für die jeweilige Stahlgüte betrieben wird bzw. betrieben werden kann, erfolgt eine Produktion entsprechend des errechneten Produktplanes.
Auf Grund von prozesstechnischen Rahmenbedingungen, Prozessereignisse, Anlagenstörungen und Abweichungen in der Stahlversorgung kann es jedoch zu einem Betrieb außerhalb der Erzeugungsvorschrift kommen.
Derzeitige Prozessoptimierungssysteme erkennen Abweichungen von der Erzeugungsvorschrift und setzen entsprechende Schrottbereiche und Qualitätsbewertungen.
Bei Schrottbereichen wird der Schnittplan entsprechend der Schrottposition angepasst. Es kann aber nur innerhalb der vorgegebenen Produktlimits darauf reagiert werden bzw. geplante Produkte durch standardisierte Lagerlängen ersetzt werden.
Bei Abweichungen von der geplanten Produktqualität ist das Produkt zwar entsprechend der geplanten Dimensionen produziert, kann jedoch nicht für den Kundenauftrag herangezogen werden.
Da in solchen Fällen das entstandene Produkt nicht direkt einem Kundenauftrag zuzuordnen ist, entstehen dem Betreiber Kosten für Nachbearbeitung, Lagerung, Produktionsverlust und / oder Verschrottung.

Derzeit wird der Produktionsplan im Voraus erstellt und die Reaktion auf Abweichungen vom Plan werden im Planungssystem erst im Nachgang berücksichtigt.
Ein dynamisches Reagieren der Produktionsplanung auf Produktionsereignisse während der Herstellung von Halbzeugen, also bevor das Produkt geschnitten wird, ist nicht vorhanden. Abweichungen von der Produktionsplanung können erfolgen durch Prozessereignisse, Qualitätsabweichungen oder Abweichungen in der Produktbreite.

Unter Prozessereignissen werden betriebsbedingte Ereignisse verstanden. Dies können beispielsweise Verteilerwechsel, Tauchrohrwechsel oder sonstige Wartungsmaßnahmen sein. Diese Prozessereignisse haben einen Einfluss auf die Produktqualität und diese Bereiche müssen aus dem Strang herausgeschnitten werden und sind sogenannte Schrottstücke. Dabei wird versucht durch Schnittlängenoptimierung die Produkte innerhalb ihrer geplanten Minimal- und Maximalabmessungen derart zu verändern, dass das Schrottstück an einem Produktende zu liegen kommt. Je nach Länge des Schrottstückes wird dieses entweder direkt abgeschnitten oder die Produktlänge - um die Länge des Schrottstückes - verlängert.
Ist eine Optimierung innerhalb der Produktgrenzen nicht möglich, so werden geplante Produkte durch Alternativprodukte ersetzt bis eine Lösung mit möglichst hoher Ausbringung erzielt wird. Da es sich dabei um eine ungeplante Produktion handelt, müssen diese Produkte zwischengelagert werden.

Qualitätsabweichungen können durch eine online Qualitätsvorhersagen des Level 2 Systems festgestellt werden. In einem solchen Fall wird das Produkt abgewertet und eine Umplanung auf einen anderen Kundenauftrag erfolgt erst im Nachgang.

Kann das Kokillenformat aufgrund von Prozessbedingungen oder Störungen nicht auf eine erforderliche Breite eingestellt werden, kommt es zu Abweichungen einer Produktbreite, welche sich im weiteren Produktionsablauf nicht beheben lässt. Diese Abweichung der Produktbreite führt zunächst zu keiner Veränderung des Produktplanes. Die Produkte werden mit der ursprünglich geplanten Ziellänge produziert. Eine Ausnahme bildet hier die Berechnung mit Gewichtsoptimierung, bei der die Brammenlänge derart angepasst wird, um das geplante Produktgewicht zu erreichen. Diese kommt jedoch nur selten zur Anwendung.

### Zusammenfassung der Erfindung

Die Aufgabe der Erfindung ist es ein Verfahren zur Verfügung zu stellen, welches eine möglichst kosteneffiziente Produktion mit minimalem Ausschuss und verringerten Lagerkosten gewährleistet.

Die Aufgabe wird mit dem eingangs genannten Verfahrens gelöst welches folgendes umfasst:
- Ein Vergleich von Soll-Produktionsparametern mit Ist-Produktionsparametern.
- Sollten die Ist-Produktionsparameter von den Soll-Produktionsparametern abweichen, wird ein Strangabbild anhand von Ist-Produktionsparametern erstellt. Das Strangabbild umfasst dabei den bereits gegossenen und noch nicht geschnittenen Strang, sowie zumindest jenen Strang, der sich anhand eines Restgewichtes im Gießverteiler und vorgegebener Parameter ergibt.
- Es wird anhand des berechneten Strangabbildes innerhalb des vorgegebenen Produktionsplans geprüft und falls möglich ein neuer Produktionsplan erstellt.
- Wenn aus dem vorgegebenen Produktionsplan keine Lösung auffindbar ist, wird das Strangabbild an ein Produktionsplanungssystem übermittelt.
- Das Produktionsplanungssystem erstellt aus allen vorliegenden Aufträgen einen neuen Produktionsplan anhand eines vorgegebenen Optimierungskriteriums.
- Danach erfolgt die Übermittlung des neuen Produktionsplanes an das Produktionssystem.

Durch den Vergleich von Soll- und Ist-Produktionsparametern werden Abweichungen in der Produktion festgestellt. Bei einer Abweichung wird das Strangabbild durch verschiedenste Parameter gebildet. Solche Parameter sind beispielsweise ein Breitenprofil des Stranges, Breitenprofil im Verteiler, Längen, Schrottpositionen, Zielqualitäten der vorgegebenen Produkte und viele andere. Das Strangabbild umfasst den bereits gegossenen Strang bis zu einem sogenannten Nullpunkt. Der Nullpunkt ist im Idealfall eine bereits erfolgte Schnittkante des Stranges, der gerade gegossen wird. Der Nullpunkt kann aber auch nach dieser Schnittkante liegen. Es hängt davon ab in welchem Umfang noch auf festgestellte Produktionsabweichungen reagiert werden kann. Es ist also abhängig von Reaktionszeiten der einzelnen Systeme, bspw. wenn der Befehl zum Schneiden der Brennschneidmaschine aufgrund von Reaktionszeiten der einzelnen Systeme nicht mehr rückgängig gemacht werden kann. Des Weiteren wird durch das Strangabbild auch jener Teil mitumfasst, der sich anhand der Produktionsparameter und des Restgewichtes im Gießverteilers ergibt. Hier handelt es sich also um eine Vorhersage aufgrund bekannter Parameter. Aus diesem Strangabbild wird im vorgegebenen Produktionsplan nach einer Lösung gesucht. Wenn aus diesem keine Lösung ermittelbar ist wird das Strangabbild an ein Produktionsplanungssystem übermittelt. Im Produktionsplanungssystem sind alle vorhandenen Aufträge gesammelt. Durch einen Vergleich mit dem Strangabbild können passende Aufträge gefunden werden. Durch ein Optimierungskriterium - beispielsweise möglichst hoher Verkaufserlös bei möglichst geringer Lagerdauer oder möglichst hoher Verkaufserlös bei Vorreihung niedrig priorisierter, aber passender, Aufträge - kann ein neuer Produktionsplan erstellt werden. Der neue Produktionsplan wird dann an das Produktionssystem übermittelt. Der neue Produktionsplan ersetzt den vorgegebenen Produktionsplan und der Strang wird dann anhand des neuen Produktionsplanes geschnitten und / oder produziert. Der Produktionsplan enthält zumindest eine erforderliche Produktdimensionen - wie zum Beispiel Soll-, Minimal-, Maximallänge, Breite, Dicke. Es sind auch noch zusätzliche werksabhängige Informationen enthalten wie zum Beispiel Kundenauftragsnummern, Zielqualität, Bestimmungsort.

Eine vorteilhafte Ausführung sieht vor, dass das Strangabbild aus zumindest einem der nachfolgenden Parameter gebildet wird:
- Breitenprofil am Strang
- Breitenprofil im Verteiler,
- Schrottpositionen und Längen,
- Qualitätsvorhersage für den Strang,
- Produktgrenzen der errechneten Lösung für eine Produktvorgabe,
- Zielqualität der vorgegebenen Produkte

Das Breitenprofil am Strang enthält die Breite des vergossenen Stranges sowie die Positionen von Breitenänderungen. Das Breitenprofil im Verteiler enthält nicht mehr veränderbare Breitenvorgaben. Die Schrottpositionen und Längen sind Positionen und Längen von Schrottstücken im Strang, welche beispielsweise beim Verteilerwechsel entstehen. Die Qualitätsvorhersage für den Strang wird durch ein Qualitätsvorhersagemodell für beliebige Strangabschnitte errechnet. Die Produktgrenzen der errechneten Lösung für die Produktvorgabe enthält die aktuell durch das Produktionssystem errechnete Lösung für die Schnittpositionen. Die Zielqualität der vorgegebenen Produkte enthält die zugewiesene Zielqualität der errechneten Lösung für die Produktvorgabe.

Eine bevorzugte Ausführungsform sieht vor, dass anhand des Strangabbildes ein eindeutiger Schlüssel, vorzugsweise ein Hash-Code, errechnet wird und dieser im Datenaustausch mit dem Produktionssystem und dem Produktionsplanungssystem verwendet wird. Dieser eindeutige Schlüssel ermöglicht ein sehr schnelles feststellen, ob sich zwischen zwei Berechnungszyklen relevante Daten des Strangabbildes verändert haben. Ein weiterer Vorteil durch diesen eindeutigen Schlüssel ist es, dass beim Übermitteln des neuen Produktionsplanes anhand dieses Schlüssels festgestellt werden kann, ob das richtige Strangabbild hinterlegt ist. Ein Fehler könnte durch Abweichungen - des an das Produktionsplanungssystem geschickten und später von diesem an das Produktionssystem übermittelten Schlüssels - erkannt werden. Es kann bei der Übermittlung auch der Fall auftreten, dass der neu erstellt Produktionsplan nicht mehr gültig ist, da sich in der Zwischenzeit das Strangabbild ein weiteres Mal verändert hat. Dieser Fall kann durch den eindeutigen Schlüssel unmittelbar erkannt werden.
Beispiel für eine Hash-Code Berechnung als Schlüssel:

```
 public int hashCode() {
     final int PRIME = 31;
     int result = strangID;
     result = PRIME * result + ((Breitenprofil == null) ? 0 :
     Breitenprofil.hashCode()) ;
     result = PRIME * result + ((defectMap == null) ? 0 :
     defectMap.hashCode()) ;
     result = PRIME * result + ((Qualitätsergebnis == null) ?
     0 : Qualitätsergebnis.hashCode());
 } return result;
```

Eine vorteilhafte Ausführungsform sieht vor, dass das Optimierungskriteriums ein möglichst hoher Verkaufserlös bei möglichst geringer Lagerdauer oder ein möglichst hoher Verkaufserlös bei Vorreihung niedrig priorisierter, aber passender, Aufträge ist.

Eine zweckmäßige Ausführungsform sieht vor, dass eine Verbindung zwischen Produktionssystem und Produktionsplanungssystem eine entkoppelte, Bi-direktionale Verbindung ist. Durch ein entkoppeltes System wird sichergestellt, dass die Produktion während der Suche nach einem neuen Produktionsplan im Produktionsplanungssystem weiterläuft. Dies erfolgt nach dem zuletzt vorgegebenen und gültigen Produktionsplan. Das Produktionsplanungssystem sucht unabhängig nach einer Lösung des Optimierungsproblems ohne die aktuelle Produktion in irgendeiner Weise zu stoppen oder zu verändern. Eine Änderung findet erst dann statt, wenn der neue Produktionsplan an das Produktionssystem übermittelt wird.

Die Aufgabe wird auch durch die eingangs genannte Stranggussanlage gelöst, welche zumindest ein Computersystem zur Durchführung des vorhergehenden beschriebenen Verfahrens aufweist. Durch diese Stranggussanlage ergeben sich die bereits zuvor beschriebenen Vorteile.

Eine vorteilhafte Ausführung sieht vor, dass die Stranggussanlage ein erstes Computersystem für ein Produktionssystem und ein zweites Computersystem für ein Produktionsplanungssystem aufweist. Das erste Computersystem und das zweite Computersystem sind durch eine entkoppelte Bi-direktionale Verbindung miteinander verbunden sind.

Die Aufgabe wird des Weiteren durch ein Computerprogramm gelöst welche Befehle umfasst, die bewirken, dass die vorher beschriebene Stranggussanlage die Verfahrensschritte nach dem zuvor beschriebenen Verfahren ausführt.

Kurze Beschreibung der Zeichnungen
Fig. 1 zeigt eine schematische Darstellung einer Stranggussanlage.
Fig. 2 zeigt einen Strang mit zugehörenden Qualitätsinformationen.
Fig. 3 zeigt ein Aktivitätsdiagramm für das beschriebene Verfahren.

### Beschreibung der Ausführungsformen

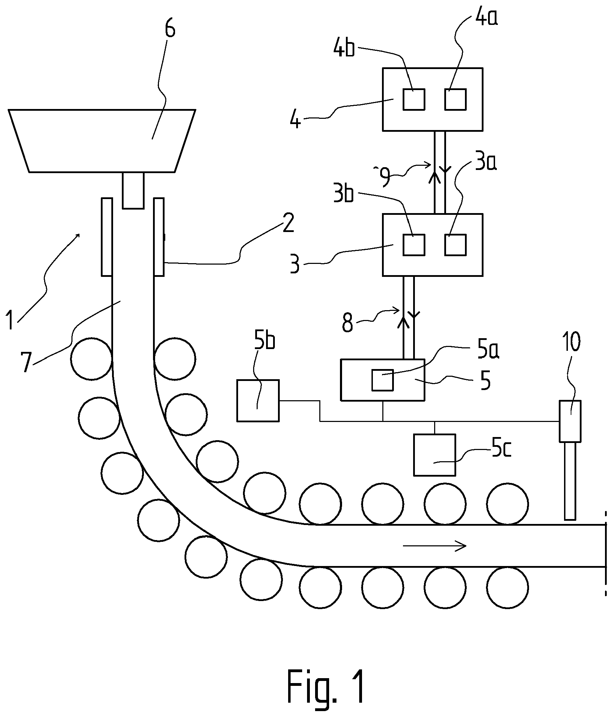

In der Fig. 1 ist schematisch eine Stranggussanlage 1 dargestellt. In eine Kokille 2 wird flüssiges Metall 6 gegossen und aus der Kokille 2 wird dann ein gegossener Strang 7 abgezogen. Ein Produktionssystem 3 ist auf einem Computersystem implementiert. Durch das Produktionssystems 3, welches eine Prozess- und Modellrechnung 3a und ein Speichersystem 3b aufweist, werden an eine Speicherprogrammierbare Steuerung 5a Daten mit Positionen - an denen eine Brennschneidmaschine 10 den Strang 7 schneiden soll - übermittelt. Das Produktionssystems 3 erhält vom Produktionsplanungssystem 4 sowie dem Regel- und Steuerungssystem 5 Eingangsparameter. Das Produktionsplanungssystem 4 ist ebenso auf einem Computersystem implementiert. Diese Eingangsparameter können einerseits von den Speicherprogrammierbaren Steuerungen 5a über eine Datenleitung 8 und/oder von einem übergeordneten Leitsystem der Industrieanlage übergeben werden. Die Speicherprogrammierbare Steuerung 5a ist mit Messinstrumenten 5b und/oder Steuerelementen 5c verbunden. Die von Messinstrumenten 5b erfassten Parameter sind beispielsweise die gemessen Strangabmessungen, Temperatur der Schmelze, Gießgeschwindigkeit und/oder Parameter der Kühlstrecke. Eine Zusammensetzung der Schmelze liegt dem Produktionssystem 3 vor oder kann von einem Speicher 3b abgerufen werden.
Wenn beispielsweise durch das Produktionssystem 3 Abweichungen von Istwerten gegenüber von Sollwerten bei der Produktion festgestellt werden, so wird ein Strangabbild berechnet und das Produktionssystem 3 versucht einen vorgegebenen Produktionsplan derart umzustellen um diese Abweichungen auszugleichen. Die Ist Parameter werden durch die Prozess- und Modellrechnung 3a errechnet. Wenn dies nicht möglich ist wird das Strangabbild über die entkoppelte Bi-Direktionale Verbindung 9 an das Produktionsplanungssystem 4 übergeben. Dieses ruft aus dem Auftragsbuch 4b vorhandene Kundenaufträge ab und versucht anhand der im Produktionsplanungsrechner 4a hinterlegten Parameter einen neuen Produktionsplan zu erstellen. Sobald der neue Produktionsplan ermittelt wurde, wird dieser vom Produktionsplanungssystem 4 an das Produktionssystem 3 übermittelt.

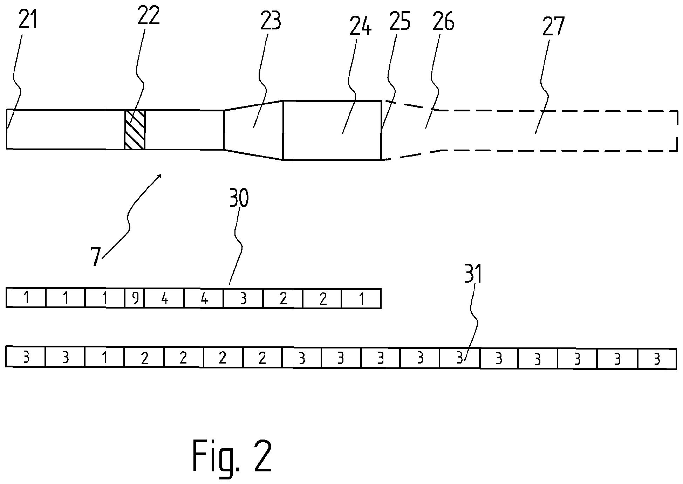

In Fig. 2 ist ein Strang 7 dargestellt, wie er in einer laufenden Produktion auftreten kann. Die Gießrichtung ist hier von der Kokillenposition 25 nach links. Der Strang 7 weißt eine Schnittkante 21 auf, welche einen möglichen Nullpunkt darstellt. Dieser Nullpunkt kann aufgrund von Bearbeitungszeiten auch weiter hinten liegen. Ein Abschnitt, welcher nicht für die weitere Produktion verwendet werden kann ist ein Schrottbereich 22.
Ein Breitenänderungsbereich 23 tritt bei Vergrößerung oder Verkleinerung von Breiteneinstellungen der Kokille auf. Es tritt dann ein Bereich auf, der einen veränderten Breitenbereich 24 darstellt. Ein Bereich von der Schnittkante 21 bis zur Kokillenposition 25 stellt jenen Bereich dar, welcher bereits gegossen ist. Der Breitenänderungsbereich 26 und Restbereich 27 stellen jene Bereiche dar, welche sich durch eine Restmenge von flüssigem Metall im Verteiler ergeben. Diese beiden Bereiche werden also zum Betrachtungszeitpunkt erst erzeugt.
In einer Qualitätsvorhersage 30 sind berechneten Ist-Qualitäten für einzelne Strangabschnitte dargestellt. In einer Zielqualität 31 sind jene Qualitäten abgebildet, welche ursprünglich durch den vorgegebenen Produktionsplan erzeugt werden sollten. Wie aus dem Vergleich von Qualitätsvorhersage 30 und Zielqualität 31 zu sehen ist, stimmen diese nicht überein, wodurch ein neuer Produktionsplan erstellt werden soll.

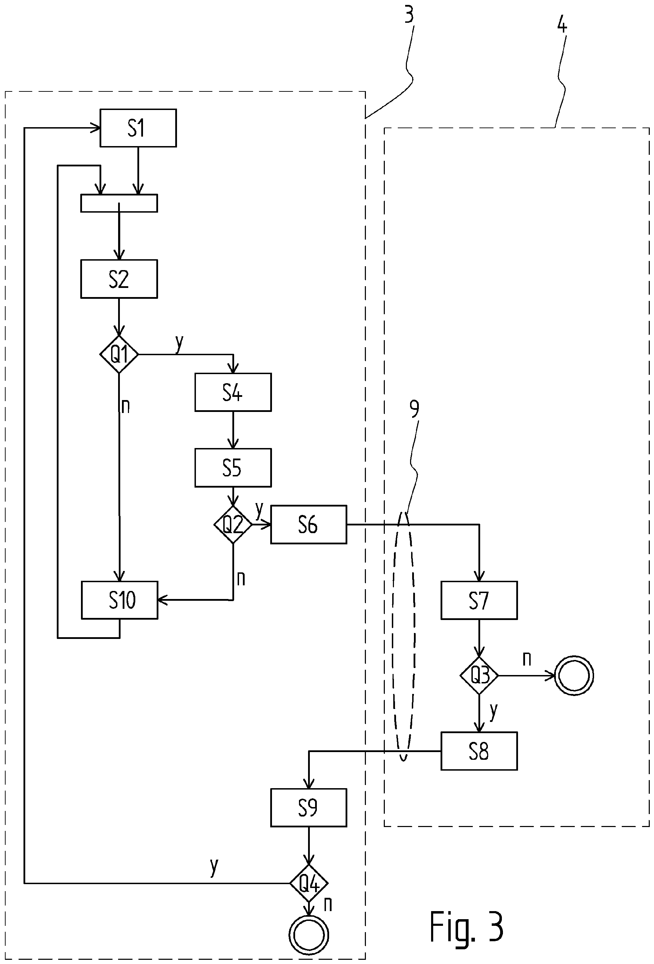

In der Fig. 3 wird ein Aktivitätsdiagramm dargestellt.
Im Schritt S1 erfolgt immer ein Update des Produktionsplanes. Im nächsten Schritt S2 wird der Schnittplan anhand des Produktionsplanes berechnet. Wenn keine Abweichung bei der Abfrage Q1 festgestellt wird, folgt der Schritt S10 in welchem die entsprechenden Schnittlängen vorgegeben werden und diese werden vom Produktionssystem 3 (Level 2 System) an eine Brennschneidmaschine übermittelt. Bei einer Abweichung wird in der Abfrage Q1 ein Schritt S4 - die Erstellung eines Strangabbildes - angestoßen. Das erstellte Strangabbild wird im Schritt S5 überprüft und bei einer Abweichung in der Abfrage Q2 der Schritt S6 eingeleitet, welcher ein Anfrage Telegramm erstellt und an ein Produktionsplanungssystem 4 übermittelt. Die Verbindung zwischen Produktionssystem 3 und Produktionsplanungssystem 4 erfolgt vorteilhafterweise über eine entkoppelte bi-direktionale Verbindung 9. In einer vorteilhaften Ausführungsform enthält dieses Anfrage Telegramm einen berechneten eindeutigen Schlüssel, welcher in weiterer Folge als Identifikation im weiteren Datenaustausch zwischen Produktionssystem 3 und Produktionsplanungssystem 4 dient. Durch diesen Schlüssel kann rasch festgestellt werden, ob sich relevante Daten zwischen Berechnungsschritten verändert haben. Das Anfrage Telegramm wird in Schritt S7 vom Produktionsplanungssystem 4 verwendet und anhand diesem wird eine Prüfung des gesamten Auftragsbuches in dem Schritt S7 durchgeführt. Das Auffinden von passenden Kundenaufträgen wird in der Abfrage Q3 überprüft. Wenn dies der Fall ist, wird in Schritt S8 ein Produktionsplan Update erstellt und ein Antwort Telegramm an das Produktionssystem 3 übermittelt. In dem Fall, dass in der Abfrage Q3 keine passenden Kundenaufträge gefunden werden, wird kein Update des Produktionsplanes erstellt. In dieser Situation arbeitet das Produktionssystem 3 mit dem ursprünglich vorgegebenen Produktionsplan weiter oder das Produktionssystem ändert nach anderen Vorgaben den Produktionsplan.
Wenn ein Produktionsplan Update erstellt wurde, wird dieses per Antwort Telegramm über die entkoppelte bi-direktionale Verbindung 9 vom Produktionsplanungssystem 4 an das Produktionssystem 3 übertragen. Im Schritt S9 wird das übermittelte Antworttelegramm am Produktionssystem 3 überprüft, ob das Antwort Telegramm beispielsweise den gleichen Schlüssel wie das Anfrage Telegramm aufweist. In der Abfrage Q4 wird dann festgestellt, ob die Daten gültig sind, wenn dies der Fall ist wird in Schritt S2 ein neuer Schnittplan berechnet. Wenn die Daten in der Abfrage Q4 als ungültig angesehen wurden, dann erfolgt kein Übermitteln der Daten an den Schritt S2. Es wird dann - wie bereits bei der Abfrage Q3 - mit dem ursprünglichen Produktionsplan weitergearbeitet oder es erfolgt eine Änderung des Produktionsplanes anhand anderer Vorgaben. Dies kann zum Beispiel derart erfolgen, dass Schrottlängen vorgegeben werden oder für bestimmte Qualitäten werden Standardlängen vorgegeben, welche auf das Lager gelegt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Stranggussanlage
- 2: Kokille
- 3: Produktionssystem
- 3a: Prozess- und Modellrechnung
- 3b: Speicher
- 4: Produktionsplanungssystems
- 4a: Produktionsplanungsrechnung
- 4b: Auftragsbuch
- 5: Regel- und/oder Steuerungssystem
- 5a: Speicherprogrammierbare Steuerung
- 5b: Messinstrumente
- 5c: Steuerelemente
- 6: Flüssiges Metall
- 7: Strang
- 8: Datenleitung
- 9: entkoppelte Bi-Direktionale Verbindung
- 10: Brennschneidemaschine
- 21: Schnittkante
- 22: Schrottbereich
- 23: Breitenänderungsbereich
- 24: Veränderter Breitenbereich
- 25: Kokillenposition
- 26: Breitenänderungsbereich
- 27: Restbereich
- 30: Qualitätsvorhersage
- 31: Zielqualität
- S1 - S10: Schritt
- Q1-Q4: Abfrage

## Patentansprüche

1. Verfahren zur dynamischen Produktionsplanung einer Stranggussanlage (1) zum Gießen eines Stranges (7) mit einem Produktionssystem (3), welches einen vorgegebenen Produktionsplan aufweist, umfassend:
- einen Vergleich von Soll-Produktionsparametern mit Ist-Produktionsparametern,
- sollten die Ist-Produktionsparameter von den Soll-Produktionsparametern abweichen, wird ein Strangabbild anhand von Ist-Produktionsparametern erstellt, wobei das Strangabbild den bereits gegossenen und noch nicht geschnittenen Strang (7) umfasst, sowie zumindest jenen Strang (7), der sich anhand eines Restgewichtes im Gießverteiler und vorgegebener Parameter ergibt,
- anhand des berechneten Strangabbildes wird innerhalb des vorgegebenen Produktionsplans geprüft und falls möglich ein neuer Produktionsplan erstellt,
- sollte aus dem vorgegebenen Produktionsplan keine Lösung auffindbar sein, wird das Strangabbild an ein Produktionsplanungssystem (4) übermittelt,
- das Produktionsplanungssystem (4) erstellt aus allen vorliegenden Aufträgen einen neuen Produktionsplan anhand eines vorgegebenen Optimierungskriteriums,
- Übermittlung des neuen Produktionsplanes an das Produktionssystem (3).

2. Verfahren zur dynamischen Produktionsplanung einer Stranggussanlage (1) zum Gießen eines Stranges (7) nach Anspruch 1, **dadurch gekennzeichnet, dass** das Strangabbild aus zumindest einem der nachfolgenden Parameter gebildet wird:
- Breitenprofil am Strang,
- Breitenprofil im Verteiler,
- Schrottpositionen und Längen,
- Qualitätsvorhersage für den Strang,
- Produktgrenzen der errechneten Lösung für die Produktvorgabe,
- Zielqualität der vorgegebenen Produkte

3. Verfahren zur dynamischen Produktionsplanung einer Stranggussanlage (1) zum Gießen eines Stranges (7) nach Anspruch 1 oder 2, **dadurch gekennzeichnet, dass** anhand des Strangabbildes ein eindeutiger Schlüssel, vorzugsweise ein Hash-Code, errechnet wird und dieser im Datenaustausch mit dem Produktionssystem (3) und dem Produktionsplanungssystem (4) verwendet wird.

4. Verfahren zur dynamischen Produktionsplanung einer Stranggussanlage (1) zum Gießen eines Stranges (7) nach Anspruch 1 - 3, **dadurch gekennzeichnet, dass** das Optimierungskriteriums ein möglichst hoher Verkaufserlös bei möglichst geringer Lagerdauer oder ein möglichst hoher Verkaufserlös bei Vorreihung niedrig priorisierter Aufträge ist.

5. Verfahren zur dynamischen Produktionsplanung einer Stranggussanlage (1) zum Gießen eines Stranges (3) nach Anspruch 1 - 4, **dadurch gekennzeichnet, dass** eine Verbindung zwischen Produktionssystem (3) und Produktionsplanungssystem (4) eine entkoppelte Bi-direktionale Verbindung (9) ist.

6. Stranggussanlage (1) umfassend zumindest ein Computersystem zur Durchführung des Verfahrens nach den Ansprüchen 1-5.

7. Stranggussanlage nach Anspruch 6, **dadurch gekennzeichnet, dass** diese ein erstes Computersystem für ein Produktionssystem (3) und ein zweites Computersystem für ein Produktionsplanungssystem (4) aufweist, wobei das erste Computersystem und das zweite Computersystem durch entkoppelte Bi-direktionale Verbindung (9) miteinander verbunden sind.

8. Computerprogramm umfassend Befehle, die bewirken, dass die Stranggussanlage (1) nach Anspruch 6 oder 7 die Verfahrensschritte nach Anspruch 1-5 ausführt.
